# EUROPÄISCHE PATENTSCHRIFT

(11) **EP 1 134 206 B1**
(45) Veröffentlichungstag und Bekanntmachung des Hinweises auf die Patenterteilung: **15.05.2013**
(21) Anmeldenummer: 01106112.4
(22) Anmeldetag: 13.03.2001
(51) Int. Cl.: C05D 9/00, C05B 13/00, C05F 3/00

(54) **Verwendung von Klärschlammverbrennungsaschen als Phosphatdünger**
Use of incineration ashes of sewage sludge as phosphatic fertiliser
Utilisation des cendres d'incinération de boues d'égouts comme engrais phosphaté

(30) Priorität: 16.03.2000 DE 10012709; 09.06.2000 DE 10028761
(43) Veröffentlichungstag der Anmeldung: 19.09.2001
(73) Patentinhaber: GFR Gesellschaft für die Aufbereitung und Verwertung von Reststoffen mbH, 97080 Würzburg (DE)
(72) Erfinder: Demmich, Jörg, Dr.-Ing., 97084 Würzburg (DE); Leimkötter, Dieter, Dipl.-Chem., 97209 Veitshöchheim (DE); Leininger, Gerhard, Dipl.-Ing. (FH), 97950 Grossrinderfeld (DE); Weißflog, Eckhard, Dr.rer.nat., 97234 Reichenberg-Lindflur (DE)
(74) Vertreter: von Kreisler Selting Werner

(56) Entgegenhaltungen:
- EP-A1- 0 937 694
- DE-A1- 2 601 676
- DE-A1- 2 601 677
- DE-C- 515 040
- DE-C- 576 390
- DE-C1- 4 240 807
- GB-A- 2 272 695
- US-A- 5 454 849
- DATABASE WPI Section Ch, Week 198613 Derwent Publications Ltd., London, GB; Class C04, AN 1986-084929 XP002181715 & JP 61 031376 A (NAGAMOTO I), 13. Februar 1986 (1986-02-13)
- DATABASE WPI Section Ch, Week 198329 Derwent Publications Ltd., London, GB; Class C04, AN 1983-714640 XP002181716 & JP 58 099191 A (SHOWA SANGYO CO), 13. Juni 1983 (1983-06-13)
- DATABASE WPI Section Ch, Week 199133 Derwent Publications Ltd., London, GB; Class C04, AN 1991-243581 XP002181717 & JP 03 159983 A (YUKISHITSU HIRYO SE), 9. Juli 1991 (1991-07-09)
- Arnold Finck: "Düngung", 1991, Verlag Eugen Ulmer GmbH, Stuttgart, DE * page 54 - page 56 *

## Beschreibung

Phosphate sind neben Stickstoffverbindungen und Kalisalzen Hauptnährstoffe im Pflanzenbau und damit in der modernen, auf höchste Erträge ausgerichteten Landwirtschaft von existenzieller Bedeutung. Im Gegensatz zu den riesigen Lagerstätten für Kalisalze oder den unbegrenzten Mengen an Luftstickstoff sind Phosphatvorkommen endlich. Fachleute rechnen, damit dass diese Vorkommen in 50 bis 300 Jahren ausgebeutet sind. Schon jetzt müssen zur Deckung des Phosphatbedarfes minderwertige, weil hochgradig schadstoffbelastete Erze abgebaut, importiert und in teuren, energieaufwendigen Verfahren aufgemahlen, aufgeschlossen und gereinigt werden.

Der mengenmäßig bedeutendste Einsatz von Phosphaten erfolgt in der Form eines phosphathaltigen Düngemittels, das die Nährstoffversorgung der Pflanzen sicherstellt. Gegebenenfalls über den Umweg als Tierfutter findet dieses Phosphat dann den Weg in die menschliche Nahrungskette und landet schließlich zusammen mit Phosphaten aus Waschmitteln in verdünnter, stark verunreinigter Form im Abwasser. Aus diesem Abwasser können durch gezielte Phosphateliminierung zwar reine, unmittelbar als Düngemittel wieder einsetzbare Phosphate gewonnen werden, doch ist diese Technik noch im Entwicklungsstadium und bisher wenig effektiv. Der überwiegende Teil der Phosphate findet sich schließlich im Klärschlamm wieder und könnte so zu einem gewissen Grad wieder landwirtschaftlich nutzbar gemacht werden. Obwohl in jüngster Zeit deutliche Erfolge erzielt werden konnten, den Schwermetallgehalt in diesen Klärschlämmen abzusenken, bestehen jedoch, insbesondere aus Furcht vor organischen Verunreinigungen und biologischen Belastungen mit unbekannter Wirkung, immer noch deutliche, zum Teil sogar zunehmende Vorbehalte gegen den landwirtschaftlichen Einsatz dieser Schlämme. Die Alternativen zur landwirtschaftlichen Nutzung - Deponierung oder Verbrennung mit anschließender Deponierung der Klärschlammverbrennungsaschen - entziehen unserem Nährstoffkreislauf unwiederbringlich den wichtigen Grundstoff Phosphat. Dies ist umso bedauerlicher, da gerade durch die heute üblicherweise praktizierte Phosphateliminierung bei der Abwasserreinigung immer phosphatreichere Klärschlämme erhalten werden.

Die DE 2 729 277 beschreibt ein Verfahren zur Herstellung von phosphathaltigen Düngemitteln, in dem unter anderem aus Klärschlammverbrennungsaschen durch Aufschlussmittel und eine Hochtemperaturbehandlung (1200 - 1400°C) pflanzenverfügbare P-Dünger erhalten werden. Als Aufschlussmittel werden hier Natriumcarbonat, Calciumoxid bzw. -hydroxid, Magnesiumoxid und Magnesiumsulfat genannt. Es wird mehrfach darauf hingewiesen, dass die in Klärschlammverbrennungsaschen gebundenen Phosphate im Anfallzustand nur schlecht pflanzenverfügbar - also unwirksam - sind. Dies wird durch Bodenuntersuchungen klärschlammaschegedüngter Böden von Biermann et al. (J. Envion. Qual. 24, 1995, 279-285 und Commun. Soil Sci. Plant Anal. 25, 1994, 2409-2437) bestätigt. Auch Mellbye weist daraufhin, dass die Phosphatwirkung von Klärschlammaschen nicht sicher belegt werden kann. Nur bei exzessiver Anwendung bzw. zusätzlicher Phosphatdüngung zeigten sich Ertragssteigerungen (J. Environ. Qual. 11, 1982, 160-163).

DE 2 601 676 offenbart ein Verfahren, bei dem Klärschlämme zunächst in konventioneller Weise verbrannt werden und die anfallenden, noch 700°C heißen Aschen anschließend auf 1300°C weiter erhitzt werden, um die in der Asche enthaltenen Phosphorverbindungen aufzuschließen. Die aufgeschlossenen Aschen weisen dann eine hohe Löslichkeit in Zitronensäure von 70 bis 98% auf und werden ohne eine weitere Nachbehandlung als Phosphordüngemittel eingesetzt.

In der DE 4 240 807 werden Klärschlammverbrennungsaschen zwar zur Herstellung von Düngemittelmischungen verwendet, treten hier jedoch nur als düngemittel-unwirksame Füllstoffe auf. Der in den Klärschlammverbrennungsaschen enthaltene Phosphatanteil wird, wie aus den genannten Rezepturen zu entnehmen ist, nicht berücksichtigt. Man geht also von einer nicht vorhandenen Düngewirkung der Klärschlammverbrennungsaschen aus.

Die JP 9 328 353 beschreibt die Zugabe von Klärschlammverbrennungsasche zu Gips sowie anderen konventionellen Düngern. Es ist nicht zu entnehmen, dass die Phosphatwirkung auf die Klärschlammverbrennungsaschen zurückzuführen ist.

Die vorliegende Erfindung hat sich die Aufgabe gestellt, durch eine bessere Verwendung von Klärschlammverbrennungsaschen als Düngemittel dem drohenden Phosphatmangel wirksam entgegenzutreten und damit den abfallrechtlichen Forderungen nach einer möglichst hochwertigen Verwertung von Abfällen Rechnung zu tragen.

Diese Aufgabe wird gelöst durch die Verwendung von Klärschlammverbrennungsaschen und/oder Aschen aus Verbrennungsanlagen, in denen Klärschlamm zusammen mit anderen Brennstoffen verbrannt wird, in mechanisch, chemisch oder chemisch-technisch unbehandelter Form als Phosphatdüngemittel.

Die erfindungsgemäß zu verwendenden Klärschlammverbrennungsaschen fallen bei der Verbrennung von Klärschlämmen gegebenenfalls auch im Gemisch mit anderen Brennstoffen, wie beispielsweise Kohle, an. Sie entstehen in der Regel durch Verbrennen dieser Schlämme z.B. in Wirbelschichtfeuerungsanlagen bei Feuerraumtemperaturen von 600°C bis 1000°C und fallen u.a. als feinkörnige Flug- und grobkörnige Bettaschen an. Die Klärschlammverbrennungsaschen zeichnen sich gegenüber anderen Aschen z.B. aus der Kohle- und Holzfeuerung durch einen hohen Phosphatgehalt aus, der im Bereich von 6% - 30% P₂O₅ liegt. Die Kornverteilung liegt in einem für Flugaschen aus Stein-oder Braunkohleverbrennung bekannten, typischen Größenbereich. Klärschlammverbrennungsaschen enthalten die mineralischen, nicht verbrennbaren Anteile der Klärschlämme. Organische Verbindungen und Stickstoffverbindungen werden bei den o.g. Temperaturen weitgehend oxidiert und in gasförmige Verbindungen wie Kohlendioxid, Wasser und Stickstoff überführt, so dass die Klärschlammverbrennungsaschen in der Regel Stickstoffgehalte unter einem Prozent und TOC-Gehalte von unter fünf Prozent aufweisen. Klärschlammverbrennungsaschen sind schwer wasserlöslich und reagieren mit Ausnahme von Klärschlammverbrennungsaschen, die bei der Verbrennung von kalkkonditionierten Klärschlämmen entstehen, pH-neutral.

Aufgrund der Schwerlöslichkeit der Klärschlammverbrennungsaschen, insbesondere dem nicht Vorhandensein wasserlöslicher Phosphate, erschien der Einsatz der phosphatreichen Aschen als Düngemittel bislang nicht möglich. Durch die Verbrennung der Klärschlämme war eigentlich mit einem deutlichen Verlust der Phosphat-Verfügbarkeit zu rechnen. Dieser ursprünglich erwartete Wirkungsverlust wurde auf folgende Phänomene zurückgeführt:
- Die in den Klärschlämmen vorliegenden biologisch gebundenen Phosphate werden durch die Beaufschlagung mit Temperaturen oberhalb von 500°C in pflanzenphysiologisch nicht verwertbare Di-, Tri-, Oligo- und Polyphosphate umgewandelt, vgl. G. Schilling, Planzenernährung und Düngung, Teil 1., Deutscher Landwirtschafts-Verlag Berlin, 3. Auflage 1990 und N. Wiberg, Lehrbuch der anorganischen Chemie, W. de Gruyter-Verlag Berlin, 91.-100. Auflage 1985.
- Die durch Phosphatfällung gebildeten Eisen- und Aluminiumphosphate, die in den Schlämmen noch als hydratisierte Gele mit großer Oberfläche vorliegen und zumindest teilweise pflanzenverfügbar sind, wandeln sich bei höheren Temperaturen in inerte, äußerst schwer lösliche Eisen- und Aluminiumphosphate um (beschleunigter Alterungsprozess), vgl. Th. Schirmer, K. Mengel, Schlussbericht zum BMBF-Forschungsvorhaben 02-WS 9451/9, 1998.
- Der in Abwässern und Klärschlämmen vorliegende Struvit (NH₄MgPO₄ • 6 H₂O), ein Ammoniummagnesiumphosphat mit guter Citratlöslichkeit, spaltet bei Temperaturen oberhalb 270°C Wasser ab und bildet das nicht citratlösliche und nicht pflanzenverfügbare Dimagnesiumdiphosphat, vgl. R.C. Weast, CRC Handbook of Chemistry and Physics, CRC Press Boca Raben, 63.rd Edition 1985.
- Obwohl die Verbrennungstemperaturen unterhalb des Schmelzpunktes der Klärschlammverbrennungsaschen gehalten werden, war zumindest eine Sinterung und damit eine Verkleinerung der aktiven Oberfläche der Klärschlammverbrennungsaschen zu erwarten.
- Ein Aufschluss der Phosphate, etwa vergleichbar dem Aufschluss von Calciumphosphaten im Rhenania-Verfahren, war aufgrund der Abwesenheit von Alkalimetallionen nicht zu erwarten, vgl. G. Trömel in Ullmanns Enzyklopädie der technischen Chemie, Band 6, 3. Aufl. 1955. Im Allgemeinen liegt der Gehalt an Na₂O + K₂O in Klärschlammverbrennungsaschen bei ca. 2%. Das Molverhältnis Na + K / P liegt mit 0,1:1 deutlich unterhalb dem für den thermischen Phosphataufschluss notwendigen Molverhältnis von 1:1. Die Feuerraumtemperaturen erreichen 600°C bis 1000°C und damit nicht die für den Aufschluss notwendigen Temperaturbereich von deutlich über 1000°C.

Unterstrichen werden diese Annahmen durch die Messung des für die Düngewirksamkeit der Naturphosphate kennzeichnenden Anteils an in 2%-iger Ameisensäure löslichen Phosphate. Es handelt sich dabei um die bisher übliche Untersuchungsmethode. So sind bei Rohphosphaten mindestens 40%, bei weicherdigen Rohphosphaten gar 55% des Gesamtphosphatgehaltes in diesem Lösungsmittel löslich. Klärschlammverbrennungsaschen weisen demgegenüber lediglich einen ameisensäurelöslichen Phosphat-Anteil von 20% bis 30% auf. Die Düngewirkung sollte, sofern überhaupt vorhanden, deutlich unterhalb anderer langsam wirkender Phosphatdünger wie weicherdigen Rohphosphaten - aufgemahlene natürliche Phosphorite, die im wesentlichen Hydroxylapatite enthalten - und auch signifikant unterhalb der Phosphatwirkung von Klärschlämmen liegen. Wasserlösliche Phosphate können im Allgemeinen nur in sehr geringer Konzentration nachgewiesen werden. Demzufolge war wenn überhaupt mit einer nur sehr geringen Pflanzenverfügbarkeit zu rechnen .

Überraschenderweise wurde jetzt im Gegensatz zu o.g. Messungen und den theoretischen Überlegungen in Pflanzenversuchen eine deutliche Phosphatwirkung beobachtet. Die in den untersuchten Klärschlammverbrennungsaschen gebundenen Phosphate sind insbesondere auf typischen landwirtschaftlich genutzten Böden, die pH-Werte zwischen 5 und 6 aufweisen, ohne weiteres mit weicherdigen Rohphosphaten vergleichbar.

Verfügbarkeitsuntersuchungen, die sich an die gängigen Untersuchungsmethoden für aufgeschlossene Phosphatdünger anlehnen, zeigen verblüffenderweise und den Erwartungen widersprechend, dass von dem Phosphatanteil der Klärschlammverbrennungsaschen ein wesentlich größerer Anteil (ca. 60%) in 2%-iger Zitronensäure löslich ist, während unter diesen Bedingungen weicherdige Rohphosphate lediglich eine Löslichkeit von 35% aufweisen. Die oft den Bedingungen im Rhizosphärenbereich der Pflanzen am Nähesten kommende Löslichkeit in neutralem Ammoniumcitrat liegt mit 20 bis 38% des Gesamtphosphates ebenfalls signifikant über der weicherdiger Rohphosphate, für die ein Wert von13 % bestimmt wurde.

Unerwartet ist, dass die Klärschlammverbrennungsaschen die Wirkung eines Phosphatdüngers zeigen, ohne dass durch einen chemisch/thermischen Aufschluss wie etwa bei der Herstellung von Rhenania-Phosphat oder Superphosphat das Phosphat in eine leichter lösliche Form überführt werden muss. Auch ist eine physikalische Behandlung wie z.B. eine Aufmahlung nicht erforderlich. Es hat sich sogar gezeigt, dass aufgemahlene Produkte zu keiner signifikanten Wirkungssteigerung führen. Das Kriterium der Wasserlöslichkeit spielt somit bei der Beurteilung der Düngewirkung von Klärschlammverbrennungsaschen überraschenderweise keine Rolle.

Als weiterhin vorteilhaft hat sich erwiesen, dass Klärschlammverbrennungsaschen sich mit Ausnahme der Aschen aus der Verbrennung kalkkonditionierter Klärschlämme aufgrund des pH-neutralen Verhaltens und der äußerst geringen Wasserlöslichkeit problemlos mit anderen Kali-, Stickstoff-, Kalk-, Magnesium- und Schwefeldüngern zu Mehrnährstoffdüngemitteln mischen lassen. Nebenreaktionen, wie sie insbesondere bei der Vermischung von aufgeschlossenen Phosphatdüngern mit Kalkdüngern auftreten oder bei der Vermischung von Thomasphosphat mit ammoniumhaltigen Düngern beschrieben werden, sind deshalb auszuschließen. Klärschlammverbrennungsaschen können auch ohne Weiteres angefeuchtet werden, da Ablöschreaktionen und eine nachträgliche Verfestigung durch puzzolanisches Verhalten entweder gar nicht oder nur untergeordnet auftreten. Ebenso ist der Einsatz in der für die Ausbringung optimalen Granulat- oder Kompaktatform problemlos möglich.

Vorteilhaft ist weiterhin, dass gegenüber herkömmlichen mineralischen Phosphatdüngern Klärschlammverbrennungsaschen deutlich geringere Cadmium-und Urankonzentrationen aufweisen. Andere umweltrelevante Schwermetalle liegen in derselben Größenordnung, wie sie auch von natürlichen Phosphatlagerstätten bekannt sind. Nur bei den Spurennährstoffen Kupfer und Zink liegen die Gehalte signifikant über den in herkömmlichen Phosphordüngern gemessenen Werten. Bei der erfindungsgemäßen Ausbringung von Klärschlammaschen als Phosphatdünger kann daher in vorteilhafter Weise auf eine zusätzliche Kupfer- und Zinkdüngung verzichtet werden.

Da die Düngewirksamkeit der in Klärschlammaschen vorliegenden Phosphaten unabhängig von der ursprünglichen Bindungsform der Phosphate ist, ist davon auszugehen, dass Aschen, die bei der Verbrennung phosphathaltiger Rückstände organischen Ursprungs, wie etwa Aschen aus der Verbrennung von Tierkörpern, Tiermehl, Knochenmehl oder Gülle vergleichbare Eigenschaften im Hinblick auf einen Einsatz als Phosphatdünger aufweisen.

## Patentansprüche

1. Verwendung von Aschen aus der Verbrennung von Klärschlamm bei 600 bis 1000°C in mechanisch, chemisch und chemisch-technisch unbehandelter Form als Phosphatdüngemittel, wobei das in den Aschen vorliegende Phosphat zu einem wesentlichen Anteil als pflanzenverfügbar berücksichtigt wird.

2. Verwendung nach Anspruch 1, wobei bei der Verbrennung zusätzlich Gülle und andere Rückstände organischen Ursprungs mit signifikanten Anteilen an Phosphat gegebenenfalls zusammen mit anderen Brennstoffen eingesetzt werden.

3. Verwendung gemäß Anspruch 1 oder 2, **dadurch gekennzeichnet, dass** diese Phosphatdüngemittel gleichzeitig zur Spurenelementdüngung für Zink und Kupfer verwendet werden.

## Claims

1. Use of ashes from the combustion of sewage sludge at 600 to 1000 °C in a form untreated by mechanical, chemical or chemical-engineering treatment as phosphate fertilizers, wherein the fact that the phosphate present in the ashes is available to plants to a substantial extent thereof is taken into account.

2. The use according to claim 1, wherein liquid manure and other residues of organic origin having significant contents of phosphate are additionally employed in said combustion, optionally together with other combustibles.

3. The use according to claim 1 or 2, **characterized in that** said phosphate fertilizers are simultaneously used for trace element fertilization for zinc and copper.

## Revendications

1. Utilisation de cendres provenant de l'incinération de boues résiduaires à une température de 600 à 1000°C sous une forme non traitée mécaniquement, chimiquement et technico-chimiquement comme engrais phosphatés, le phosphate présent dans les cendres étant considéré comme utile pour les plantes à un pourcentage important.

2. Utilisation selon la revendication 1, dans laquelle lors de la combustion l'on utilise du purin et d'autres résidus d'origine organique avec des pourcentages de phosphate significatifs éventuellement conjointement avec d'autres matières combustibles.

3. Utilisation selon la revendication 1 ou 2, **caractérisée en ce que** ces engrais phosphatés sont en même temps utilisés pour le zinc et le cuivre pour la fertilisation à oligoéléments.
